# EUROPÄISCHE PATENTSCHRIFT

(11) **EP 0 953 234 B1**
(45) Veröffentlichungstag und Bekanntmachung des Hinweises auf die Patenterteilung: **21.11.2001**
(21) Anmeldenummer: 98907834.0
(22) Anmeldetag: 20.01.1998
(51) Int. Cl.: H04B 3/23, H04B 1/58

(54) **SCHALTUNGSANORDNUNG ZUR ZWEIDRAHT-VIERDRAHT-UMSETZUNG**
CIRCUIT FOR TWO-WIRE / FOUR-WIRE CONVERSION
CIRCUIT POUR LA TRANSFORMATION DEUX FILS-QUATRE FILS

(30) Priorität: 20.01.1997 DE 19701785
(43) Veröffentlichungstag der Anmeldung: 03.11.1999
(73) Patentinhaber: Infineon Technologies AG, 81669 München (DE)
(72) Erfinder: GAZSI, Lajos, D-40239 Düsseldorf (DE); HAUPTMANN, Jörg, A-9241 Wernberg (DE)
(74) Vertreter: Zedlitz, Peter, Dipl.-Inf.
(86) Internationale Anmeldenummer: DE9800169
(87) Internationale Veröffentlichungsnummer: WO9832241

(56) Entgegenhaltungen:
- EP-A- 0 122 594
- EP-A- 0 464 500
- WO-A-95/17049
- US-A- 5 051 981
- US-A- 5 585 802

## Beschreibung

Die Erfindung betrifft eine Schaltungsanordnung zur Zweidraht-Vierdraht-Umsetzung mit Empfangsmitteln, die eingangsseitig mit einem digitalen Zweidraht-Empfangsweg gekoppelt sind und über diesen ein digitales Empfangssignal erhalten, mit den Empfangsmitteln nachgeschalteten Signalbearbeitungsmitteln, die ein erstes und zweites Signal abgeben, mit Echounterdrückungsmitteln, denen das erste Signal zugeführt wird und die ein drittes Signal abgeben, mit Mitteln zur Digital-Analog-Umsetzung, denen das zweite Signal zugeführt wird und die ein zweites Signal abgeben, mit einer Hybridschaltung, die mit einem analogen Vierdraht-Sende-Empfangsweg gekoppelt ist, der das vierte Signal zugeführt wird und die ein fünftes Signal abgibt, mit Mitteln zur Analog-Digital-Umsetzung, denen das fünfte Signal zugeführt wird und die ein sechstes Signal abgeben, und mit Sendemitteln, denen das sechste Signal zugeführt wird, die ausgangsseitig mit einem digitalen Zweidraht-Sendeweg gekoppelt sind und die an diesen ein digitales Sendesignal abgeben.

Derartige Schaltungsanordnungen sind beispielsweise aus EP-A-0122594, US 5,051,981 und in vielfältigen Ausgestaltungen aus der WO 95/17049 bekannt. Dabei kommmt insbesondere ein Verfahren zum Verringern von Clipping- oder Quantisierungseffekten von Digital-Analog-Umsetzern im Sendepfad der Echounterdrückung zur Anwendung,. Insbesondere für ADSL geeignete Systeme, die Multi-Carrier-Modulation verwenden, sind auch unter anderem bei John A.C. Bingham, IEEE Communications Magazine, Vol. 28, Nr. 5 Seiten 5-14, Mai 1990, bei S.Fleming et al., Telephony, 12. Juli 1993, Seiten 20-26 sowie bei M.Ho et al., 1993 International Conference on Communications, Seiten 772-776, Mai 1993 beschrieben. Ein Problem bei diesen drei zuletzt genannten Anordnungen ist, daß sich durch Clipping und Quantisierung hervorgerufenes Rauschen durch übliche Echounterdrückungssysteme nicht beseitigen läßt und daher die Übertragungseigenschaften des Übertragungssystems negativ beeinflußt werden. Mit dem in der WO 95/17049 vorgestellten Verfahren und Übertragungssystemen werden diese Effekte deutlich reduziert. Jedoch werden dabei erhöhte Anforderungen insbesondere an die Qualität der Digital-Analog-Umsetzung gestellt. Die Digital-Analog-Umsetzung sollte dabei nahezu ideal sein, so daß Digital-Analog-Konverter, die dem Nyquist-Kriterium nicht genügen, ungeeignet sind. Geeignete Digital-Analog-Umsetzer erfordern jedoch sowohl hohen schaltungstechnischen Aufwand und als auch einen hohen Abgleichaufwand, weshalb sie für eine Realisierung in integrierter Schaltungstechnik weniger geeignet sind. Sehr geeignet für eine Realisierung in integrierter Schaltungstechnik sind dagegen nach dem Sigma-Delta-Modulatorprinzip arbeitende Digital-Analog-Umsetzer, die jedoch nicht dem Nyquist-Kriterium genügen und daher bei den in der WO 95/17049 beschriebenen Systemen nicht ohne weiteres eingesetzt werden können. Ein geeigneter Digital-Analog-Umsetzer ist beispielsweise aus US 5,585,802 bekannt.

Aufgabe der Erfindung ist es, eine Schaltungsanordnung der eingangs genannten Art mit verbesserter Integrierbarkeit auch bei Verwedung des bekannten Verfahrens zur Verringerung von Clipping- und Quantisierungseffekten anzugeben.

Die Aufgabe wird durch eine Schaltungsanordnung gemäß Patentanspruch 1 gelöst. Ausgestaltungen und Weiterbildungen des Erfindungsgedankens sind Gegenstand von Unteransprüchen.

Die Schaltungsanordnung weist als Mittel zur Digital-Analog-Umsetzung einen Sigma-Delta-Modulator auf. Insbesondere umfassen die Mittel zur Digital-Analog-Umsetzung als Sigma-Delta-Modulationseinrichtung ein Interpolationsfilter, denen das zweite Signal zugeführt wird, ein dem Interpolationsfilter nachgeschaltetes digitales Noise-Shaping-Filter sowie einem diesen wiederum nachgeschaltetes analoges Rekonstruktionsfilter. Am Ausgang des analogen Rekonstruktionsfilters ist dabei das vierte Signal abgreifbar. Im Interpolationsfilter wird das zweite Signal digital interpoliert und somit für das nachfolgende Oversampling aufbereitet. Das nachfolgende Noise-Shaping-Filter erzeugt aus den N-Bit des digitalen Signals am Ausgang des Interpolationsfilters ein 1 Bit breites Pulsmodulationssignal unter Verwendung mehrerer, beispielsweise 1 bis 6, Rückkopplungsschleifen. Aus diesem 1 Bit breiten digitalen Bitstrom wird mittels eines analogen Filters, wie beispielsweise einer RC-Schaltung oder eines Switches-Capacitor-Netzwerkes, das analoge Signal rekonstruiert.

Erfindungsgemäß wird das Ausgangssignal des digitalen Noise-Shaping-Filters ein Approximationsfilter zugeführt, dem wiederum ein Echoschätzfilter nachgeschaltet ist. Das Ausgangssignal des Echoschätzfilters wird dabei dem Ausgangssignal der Mittel zum Analog-Digital-Umsetzen, nämlich dem sechsten Signal, subtraktiv überlagert. Das Approximationsfilter dient dazu, daß analoge Rekonstruktionsfilter zu approximieren. Es handelt sich somit u.a. um ein DAC-Schätzfilter. Das bedeutet, daß das analoge Signal am Ausgang des analogen Rekonstruktionsfilters, nämlich das vierte Signal, durch das digitale Signal am Ausgang des Approximationsfilters angenähert wird. Darüber hinaus wird das überabgetastete Signal im Approximationsfilter auf die in der gesamten Schaltungsanordnung verwendete Abtastrate herabgesetzt. Mittels des Echoschätzfilters wird adaptiv das Verhalten der Hybridschaltung und des analogen Sende-Empfangs-Wegs angenähert. Vorteil dabei ist, daß sowohl lineare als auch nichtlineare, beispielsweise beim digitalen Noise-Shaping entstehende Signale kompensiert werden.

Darüber hinaus kann die vorstehend genannte Weiterbildung der Erfindung durch ein Verzögerungsschätzfilter erweitert werden, dem eingangsseitig das zweite Signal zugeführt wird und dessen Ausgangssignal dem Ausgangssignal des Approximationsfilters substraktiv mit dem Ausgangssignal des Approximationsfilters überlagert und mit diesem zusammen dem Echoschätzfilter zugeführt wird. Damit wird erreicht, daß nur der nichtlineare, im digitalen Noise-Shaping-Filter entstandene Signalanteil weitergeleitet wird und demzufolge das Echoschätzfilter auf einfachere Weise und damit mit geringerem Aufwand realisiert werden kann. Das Verzögerungsschätzfilter ist dabei derart ausgebildet, daß die Zeitverzögerung und der Amplitudengang des Interpolationsfilters kompensiert wird.

Bei einer anderen Weiterbildung der Erfindung wird zur Herabsetzung der Abtastrate ein eigenes digitales Dezimationssfilter eingesetzt, das dem Approximationsfilter nachgeschaltet ist. Auf das digitale Dezimationsfilter folgt demzufolge das Echoschätzfilter. Der Weiterbildung gemäß wird das Ausgangssignal des Interpolationsfilters dem Ausgangssignal des Approximationsfilters substraktiv überlagert und so dem digitalen Dezimationssfilter zugeführt. Durch die Aufspaltung des Approximationsfilters in einen rein approximierenden ("schätzenden") Teil und in einen Dezimationsteil wird die Subtraktion bei hohen Abtastraten durchgeführt, wobei ein Ausgleich der Verzögerungszeit entfallen kann.

Weiterhin kann nach dem digitalen Dezimationsfilter eine Hybrid-Kompensationseinheit - auch als Hybrid-Schätzfilter bezeichnet -vorgesehen werden, die die Nichtlinearitäten beispielsweise der Line-Treiber in der Hybridschaltung annähert. Die Annäherung erfolgt beispielsweise über eine nichtlineare Charakteristik, die auf den digitalen Bitstrom am Ausgang des digitalen Dezimationsfilters angewendet wird.

Desweiteren kann das Ausgangssignal des Echoschätzfilters unter Zwischenschaltung eines weiteren Interpolationsfilters, eines weiteren digitalen Noise-Shaping-Filters sowie eines weiteren Dezimationsfilters in Reihe mit dem Ausgangssignal der Mittel zur Analog-Digital-Umsetzung verknüpft werden. Die Anordnung aus weiterem Interpolationsfilter, weiterem digitalen Noise-Shaping-Filter sowie weiterem Dezimationsfilter dient zur Nachbildung der Übertragungseigenschaften der Mittel zur Analog-Digital-Umsetzung.

Es kann darüberhinaus vorgesehen werden, daß die Signalbearbeitungsmittel zudem ein siebtes Signal abgeben, das unter Zwischenschaltung von Mitteln zur Echoschätzung mit dem sechsten Signal subtraktiv verknüpft den Sendemitteln zugeführt wird und/oder daß die Signalbearbeitungsmittel zudem ein achtes Signal abgeben, das zum Steuern der Echounterdrückungsmittel vorgesehen ist.

Schließlich können zwischen die Mittel zur Analog-Digital-Umsetzung und die Sendemittel weitere Mittel zur Signalbearbeitung geschaltet werden.

Die Erfindung wird nachfolgend anhand der in den Figuren der Zeichnung dargestellten Ausführungsbeispiele näher erläutert. Es zeigen:
- Figuren 1: bis 8 prinzipielle Ausgestaltungen einer Schaltungsanordnung nach dem Stand der Technik,
- Figur 9: eine erste Ausführungsform des den AD-Umsetzer, die Hybridschaltung und dem DA-Umsetzer enthaltenden Schaltungsteils,
- Figur 10: die Kennlinie des Approximationsfilters bei der Ausführungsform nach Figur 9 und
- Figur 11: eine zweite Ausführungsform des den AD-Umsetzer, die Hybridschaltung und dem DA-Umsetzer enthaltenden Schaltungsteils.

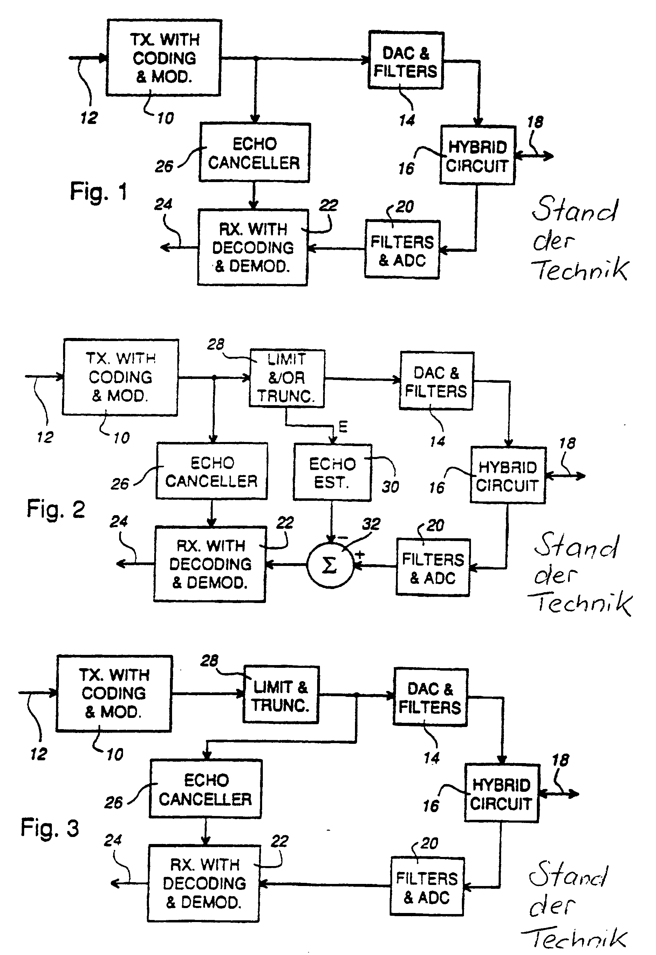

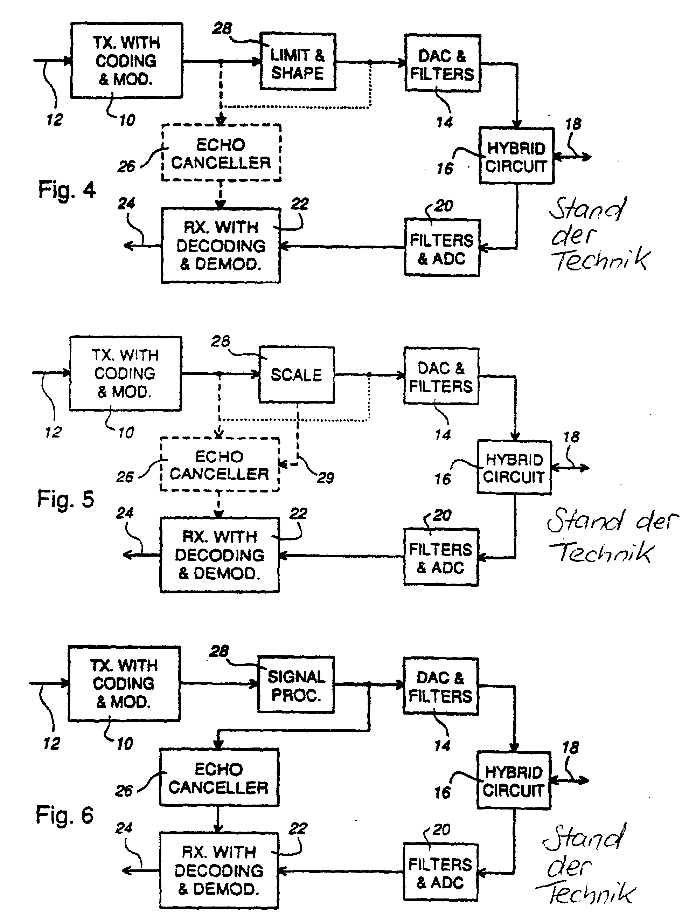

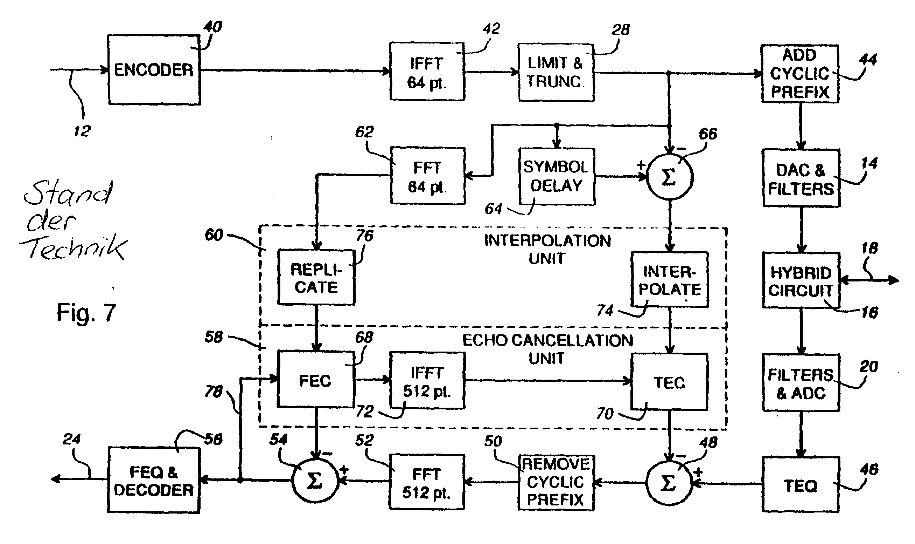

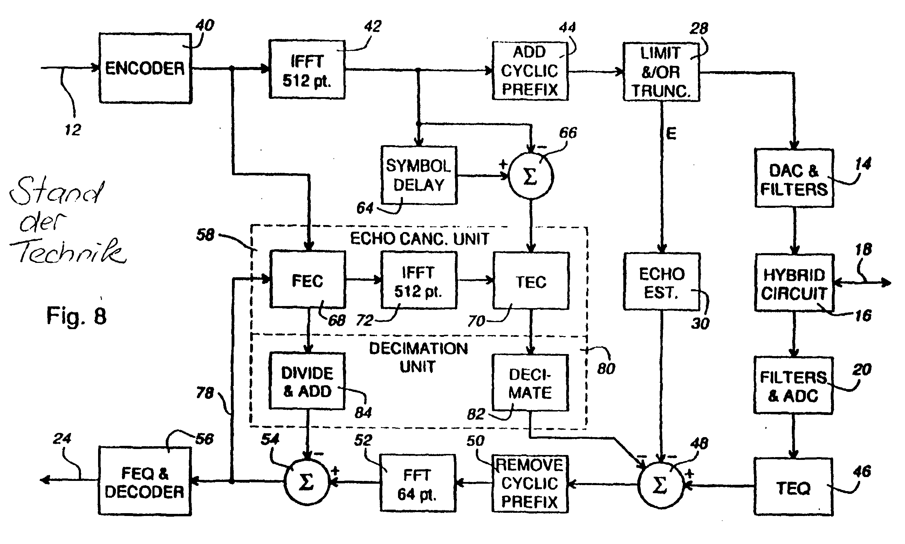

Die in den Figuren 1 bis 8 gezeigten Ausführungsformen sind im einzelnen in der WO 95/17049 detailliert in Aufbau und Funktionsweise beschrieben. Es wird daher auf die dort niedergelegten Erläuterungen verwiesen. Die in den Figuren 1 bis 8 dargestellten Ausführungsformen weisen sämtlich Empfangsmittel 10 bzw. 40 auf, die eingangsseitig mit einem digitalen Zweidraht-Empfangsweg 12 gekoppelt sind. Den Empfangsmitteln 10 bzw. 40 sind Signalbearbeitungsmittel 28 nachgeschaltet, die ein erstes und zweites Signal abgeben. Das erste Signal wird dabei Echounterdrückungsmitteln 26 bzw. 58 zugeführt, die ein drittes Signal abgeben. Das zweite Signal wird an Mittel zur Digital-Analog-Umsetzung 14 angelegt, deren Ausgangssignal, ein viertes Signal, einer Hybridschaltung 16 zugeführt wird. Diese ist mit einem analogen Vierdraht-Sende-Empfangsweg 18 gekoppelt und gibt ein fünftes Signal ab, das als Eingangssignal für Mittel zur Analog-Digital-Umsetzung 20 vorgesehen ist. Den Mitteln zur Analog-Digital-Umsetzung 20 sind Sendemittel 22 nachgeschaltet, denen neben dem Ausgangssignal der Mittel zur Analog-Digital-Umsetzung 20, nämlich dem sechsten Signal, auch das Ausgangssignal der Echounterdrückungsmittel, nämlich das dritte Signal, zugeführt wird. Die Sendemittel 22 bzw. 56 sind ausgangsseitig mit einem digitalen Zweidraht-Sendeweg 24 gekoppelt. Erfindungsgemäß arbeiten dabei die Mittel zur Digital-Analog-Umsetzung 14 nach dem Sigma-Delta-Modulationsprinzip.

Dabei kann vorgesehen werden, daß die Signalbearbeitungsmittel 28 zudem ein siebtes Signal E abgeben, das unter Zwischenschaltung von Mitteln zur Echoschätzung 30 mit dem sechsten Signal subtraktiv verknüpft den Sendemitteln 22 bzw. 56 zugeführt wird und/oder daß die Signalbearbeitungsmittel 28 zudem ein achtes Signal abgeben, das zum Steuern der Echounterdrückungsmittel 26 bzw. 58 vorgesehen ist. Auch können zwischen die Mittel zur Analog-Digital-Umsetzung 20 und die Sendemittel 22 weitere Mittel zur Signalbearbeitung 50, 52 geschaltet werden.

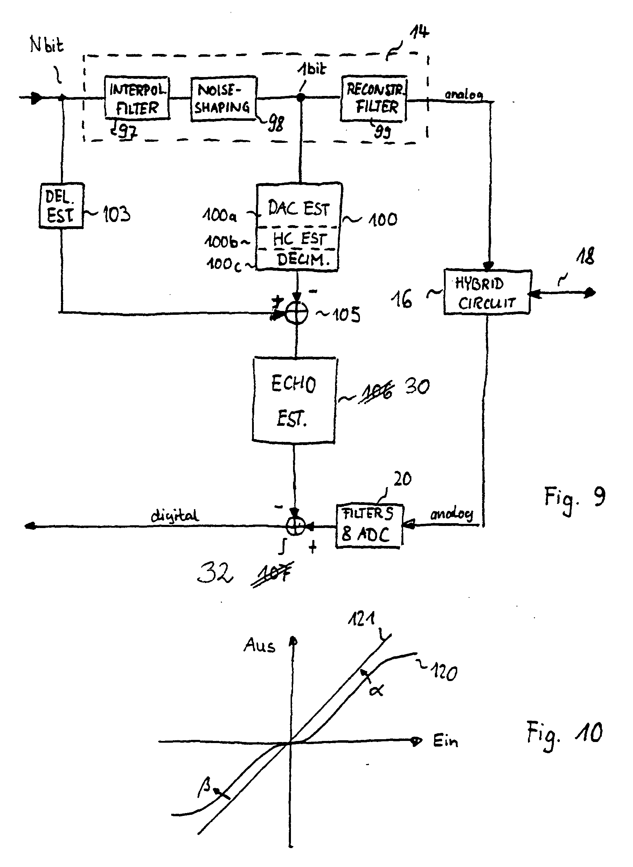

Gemäß Fig. 9 umfassen die Mittel zur Digital-Analog-Umsetzung insbesondere ein Interpolationsfilter 97, denen das Ausgangssignalsignal der Signalbearbeitungsmittel 28 zugeführt wird, ein dem Interpolationsfilter 97 nachgeschaltetes digitales Noise-Shaping-Filter 98 sowie einem diesen wiederum nachgeschaltetes analoges Rekonstruktionsfilter 99. Das am Ausgang des analogen Rekonstruktionsfilters 99 abgreifbare Signal wird im Interpolationsfilter 97 digital interpoliert und somit für das nachfolgende Oversampling aufbereitet. Das nachfolgende Noise-Shaping-Filter 98 erzeugt aus den N-Bit des digitalen Signals am Ausgang des Interpolationsfilters 97 ein 1 Bit breites Pulsmodulationssignal unter Verwendung mehrerer, beispielsweise 1 bis 6, Rückkopplungsschleifen. Aus diesem 1 Bit breiten digitalen Bitstrom wird mittels des analogen Rekonstruktionsfilters, das beispielsweise eine RC-Schaltung oder ein Switched-Capacitor-Netzwerk aufweist, das analoge Signal rekonstruiert.

Das Ausgangssignal des digitalen Noise-Shaping-Filters 98 wird in Weiterbildung der Erfindung einem Approximationsfilter 100 zugeführt, dem wiederum ein Echoschätzfilter 30 nachgeschaltet ist. Das Ausgangssignal des Echoschätzfilters 30 wird dabei dem Ausgangssignal der Mittel zur Analog-Digital-Umsetzung 20 mittels der Subtrahiereinrichtung 32 subtraktiv überlagert. Das Approximationsfilter 100 dient dazu, das analoge Rekonstruktionsfilter 99 zu approximieren. Es handelt sich somit im wesentlichen um ein Schätzfilter zur Annäherung des Verhaltens der Mittel zur Digital-Analog-Umsetzung 14. Das bedeutet, daß das analoge Signal am Ausgang des analogen Rekonstruktionsfilters 99 durch das digitale Signal am Ausgang des Approximationsfilters 100 angenähert wird. Darüber hinaus wird das überabgetastete Signal im Approximationsfilter 100 auf die in der gesamten Schaltungsanordnung verwendete Abtastrate herabgesetzt. Mittels des Echoschätzfilters 30 wird adaptiv das Verhalten der Hybridschaltung 16 und des analogen Sende-Empfangs-Wegs 18 angenähert. Vorteil dabei ist, daß sowohl lineare als auch nichtlineare, beispielsweise beim digitalen Noise-Shaping entstehende Signale kompensiert werden.

Darüber hinaus ist die vorstehend genannte Ausführungsform durch ein Verzögerungsschätzfilter 103 erweitert, welchem eingangsseitig das Ausgangssignal der Signalbearbeitungsmittel 28 zugeführt wird und dessen Ausgangssignal dem Ausgangssignal des Approximationsfilters 100 mittels der Subtrahiereinrichtung 105 subtraktiv überlagert und mit diesem zusammen dem Echoschätzfilter 30 zugeführt wird. Durch die Differenzbildung der Ausgangssignale von Verzögerungsschätzfilter 103 und Approximationsfilter 100 wird erreicht, daß nur der nichtlineare, im digitalen Noise-Shaping-Filter 98 entstandene Signalanteil weitergeleitet wird und demzufolge das Echoschätzfilter 30 auf einfachere Weise und damit mit geringerem Aufwand realisiert werden kann. Das Verzögerungsschätzfilter 103 ist dabei derart ausgebildet, daß die Zeitverzögerung und der Amplitudengang des Interpolationsfilters 97 kompensiert wird. Der lineare Echoanteil kann dabei ggf. bereits durch die Mittel zur Echounterdrückung 26 kompensiert werden.

Weiterhin kann das Approximationsfilter 100 neben einem DAC-Schätzfilter 100a auch ein Hybrid-Schätzfilter 100b, das die Nichtlinearitäten beispielsweise der Line-Treiber in der Hybridschaltung 16 annähert, sowie ein digitales Dezimationsfilter 100c aufweisen.

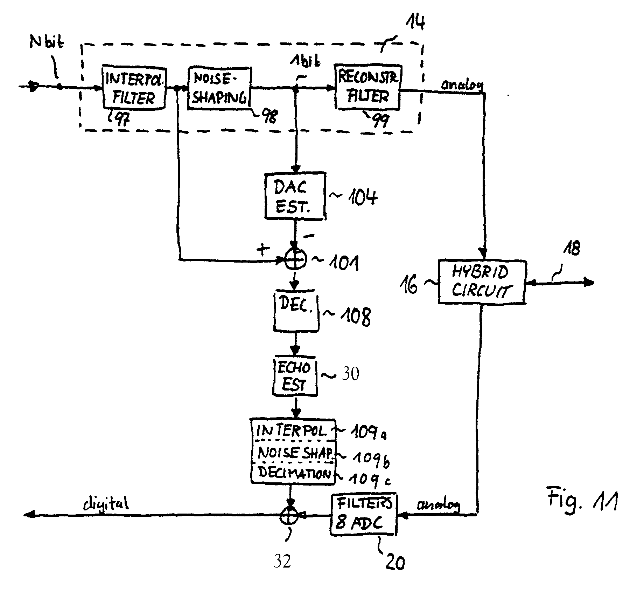

Die Annäherung beim Hybrid-Schätzfilter 100b erfolgt gemäß Fig. 10 beispielsweise entsprechend einer nichtlinearen Charakteristik 120 mit begrenzendem, beispielsweise annähernd logarithmischem Verlauf gegenüber einem linearen Verlauf 121, die auf den digitalen Bitstrom am Eingang (oder am Ausgang) des digitalen Dezimationsfilters 110c angewendet wird. Die Charakteristik 120 kann beispielsweise von verschiedenen Koeffizienten α, β abhängig sein, die -falls gewünscht- einstellbar sind.

Bei dem Ausführungsbeispiel gemäß Fig. 11 ist die Ausführungsform nach Fig. 9 die Erfindung weiterbildend derart abgeändert, daß zur Herabsetzung der Abtastrate ein eigenes digitales Dezimationssfilter 108 eingesetzt ist, das einem das Approximationsfilter 100 ersetzenden DAC-Schätzfilter 104 nachgeschaltet ist, wobei in den Ausführungsbeispielen der Fig. 9 und 11 gleiche Elemente mit gleichen Bezugszeichen versehen sind. Auf das digitale Dezimationsfilter 108 folgt demzufolge das Echoschätzfilter 30.

Einer Weiterbildung gemäß wird das Ausgangssignal des Interpolationsfilters 97 dem Ausgangssignal des DAC-Schätzfilters 104 substraktiv mittels einer Subtrahiereinrichtung 101 überlagert und so dem digitalen Dezimationssfilter 108 zugeführt. Durch die Aufspaltung des Approximationsfilters 100 aus Fig. 9 in einen rein approximierenden ("schätzenden") Teil und in einen Dezimationsteil wird die Subtraktion mittels der Subtrahiereinrichtung 101 bei hohen Abtastraten durchgeführt, wobei ein Ausgleich der Verzögerungszeit entfallen kann.

Schließlich wird das Ausgangssignal des Echoschätzfilters 106 unter Zwischenschaltung eines weiteren Interpolationsfilters 109a, eines weiteren digitalen Noise-Shaping-Filters 109b sowie eines weiteren Dezimationsfilters 109c in Reihe mit dem Ausgangssignal der Mittel zur Analog-Digital-Umsetzung 20 mittels der Subtrahiereinrichtung 32 verknüpft. Die Anordnung aus weiterem Interpolationsfilter 109a, weiterem digitalen Noise-Shaping-Filter 109b sowie weiterem Dezimationsfilter 109c dient zur Nachbildung der Übertragungseigenschaften der Mittel zur Analog-Digital-Umsetzung 20.

Selbstredend ist, daß die Abtastrate am Ausgang eines Interpolationsfilters höher ist als an seinem Eingang und daß die Abtastrate am Ausgang eines Dezimationsfilters niedriger ist als an seinem Eingang.

## Patentansprüche

1. Schaltungsanordnung zur Zweidraht-Vierdraht-Umsetzung
mit Empfangsmitteln (10), die eingangsseitig mit einem digitalen Zweidraht-Empfangsweg (12) gekoppelt sind und über diesen ein digitales Empfangssignal erhalten,
mit den Empfangsmitteln nachgeschalteten Signalbearbeitungsmitteln (28), die ein erstes und zweites Signal abgeben,
mit Echounterdrückungsmitteln (26), denen das erste Signal zugeführt wird und die ein drittes Signal abgeben,
mit Mitteln zur Digital-Analog-Umsetzung (14), denen das zweite Signal zugeführt wird und die ein viertes Signal abgeben,
mit einer Hybridschaltung (16), die mit einem analogen Vierdraht-Sende-Empfangsweg (18) gekoppelt ist, der das vierte Signal zugeführt wird und die ein fünftes Signal abgibt,
mit Mitteln zur Analog-Digital-Umsetzung (20), denen das fünfte Signal zugeführt wird und die ein sechstes Signal abgeben, und
mit Sendemitteln (22), denen das sechste Signal zugeführt wird, die ausgangsseitig mit einem digitalen Zweidraht-Sendeweg (24) gekoppelt sind und die an diesen ein digitales Sendesignal abgeben, wobei die Mittel zur Digital-Analog-Umsetzung (14) ein siebtes Signal abgeben, das einem Echoschätzfilter (30) zugeführt wird, dessen Ausgangssignal mit dem sechsten Signal subtraktiv (32) überlagert wird,
**dadurch gekennzeichnet,**
**daß** die Mittel zur Digital-Analog-Umsetzung (14) ein Interpolationsfilter (97), dem das zweite Signal zugeführt wird, ein dem Interpolationsfilter nachgeschaltetes digitales Noise-Shaping-Filter (98) sowie ein diesem wiederum nachgeschaltetes analoges Rekonstruktionsfilter (99) aufweisen,
**daß** das Ausgangssignal des digitalen Noise-Shaping-Filters (98) einem Approximationsfilter (104, 100) zugeführt wird, das dem Echoschätzfilter (30) vorgeschaltet ist.

2. Schaltungsanordnung nach Anspruch 1,
**dadurch gekennzeichnet,**
**daß** einem Verzögerungsschätzfilter (103) eingangsseitig das zweite Signal zugeführt wird und daß dessen Ausgangssignal dem Ausgangssignal des Approximationsfilters (100) substraktiv (105) überlagert und mit diesem zusammen dem Echoschätzfilter (30) zugeführt wird.

3. Schaltungsanordnung nach Anspruch 1 oder 2,
**dadurch gekennzeichnet,**
**daß** zur Herabsetzung der Abtastrate ein eigenes digitales Dezimationssfilter (108, 100c) vorgesehen ist, das dem Approximationsfilter (104, 100a) nachgeschaltet ist.

4. Schaltungsanordnung nach Anspruch 3,
**dadurch gekennzeichnet,**
**daß** dem Dezimationsfilter (100c) ein Hybrid-Schätzfilter (100b) vorgeschaltet ist, das das Verhalten der Hypridschaltung annähert.

5. Schaltungsanordnung nach einem der vorherigen Ansprüche,
**dadurch gekennzeichnet,**
**daß** das Ausgangssignal des Echoschätzfilters (30) unter Zwischenschaltung eines weiteren Interpolationsfilters (109a), eines weiteren digitalen Noise-Shaping-Filters (109b) sowie eines weiteren Dezimationsfilters (109c) in Reihe mit dem Ausgangssignal der Mittel zur Analog-Digital-Umsetzung (20) subtraktiv verknüpft (32) wird.

## Claims

1. Circuit arrangement for two-wire/four-wire conversion, having receiving means (10) which are coupled on the input side to a digital two-wire reception path (12) via which they receive a digital received signal, having signal-processing means (28) which are connected downstream of the receiving means and emit a first and second signal, having echo-cancelling means (26) to which the first signal is fed and which emit a third signal, having means for digital-to-analog conversion (14) to which the second signal is fed and which emit a fourth signal, having a hybrid circuit (16) which is coupled to an analog fourwire transmission-reception path (18), to which the fourth signal is fed, and which emits a fifth signal, having means for analog-to-digital conversion (20) to which the fifth signal is fed and which emit a sixth signal and having transmitting means (22) to which the sixth signal is fed, which are coupled on the output side to the digital two-wire transmission path (24) and which emit a digital transmitted signal to the latter, the means for digital-to-analog conversion (14) emitting a seventh signal which is fed to an echo-estimating filter (30) whose output signal is subtractively (32) superimposed with the sixth signal, **characterized in that** the means for digital-to-analog conversion (14) have an interpolation filter (97), to which the second signal is fed, a digital noise-shaping filter, (98) connected downstream of the interpolation filter, and an analog reconstruction filter (99) connected in turn, downstream, of said noise-shaping filter, and **in that** the output signal of the digital noise-shaping filter (98) is fed to an approximation filter (104, 100) which is connected upstream of the echo-estimating filter (30).

2. Circuit arrangement according to Claim 1,
**characterized in that** the second signal is fed on the input side to a delay-estimating filter (103), and **in that** the output signal thereof is subtractively (105) superimposed on the output signal of the approximation filter (100) and is fed together therewith to the echo-estimating filter (30).

3. Circuit arrangement according to Claim 1 or 2, **characterized in that** a dedicated digital decimation filter (108, 100c) which is connected downstream of the approximation filter (104, 100a) is provided for the purpose of reducing the sampling rate.

4. Circuit arrangement according to Claim 3,
**characterized in that** a hybrid estimating filter (100b) which approximates the behaviour of the hybrid circuit is located downstream of the decimation filter (100c).

5. Circuit arrangement according to one of the preceding claims, **characterized in that** the output signal of the echo-estimating filter (30) is subtractively combined (32) in series with the output signal of the means for analog-to-digital conversion (20) with the interposition of a further interpolation filter (109a), a further digital noise-shaping filter (109b) and a further decimation filter (109c).

## Revendications

1. Circuit pour la transformation deux fils quatre fils,
comprenant des moyens de réception (10) qui sont couplés côté entrée à une voie de réception deux fils numérique (12) et qui reçoivent par l'intermédiaire de celle-ci un signal de réception numérique,
comprenant des moyens de traitement de signal (28) qui sont branchés du côté aval des moyens de réception et qui délivrent un premier et un deuxième signal,
comprenant des moyens de suppression d'écho (26) auxquels le premier signal est envoyé et qui délivrent un troisième signal,
comprenant des moyens pour la conversion numérique-analogique (14) auxquels le deuxième signal est envoyé et qui délivrent un quatrième signal,
comprenant un circuit hybride (16) qui est couplé à une voie d'émission et de réception quatre fils analogique (18), auquel le quatrième signal est envoyé et qui produit un cinquième signal,
comprenant des moyens pour la conversion analogique-numérique (20) auxquels le cinquième signal est envoyé et qui délivrent un sixième signal, et
comprenant des moyens d'émission (22) auxquels le sixième signal est envoyé, qui sont couplés côté sortie à une voie d'émission deux fils numérique (24) et qui délivrent à celle-ci un signal d'émission numérique, les moyens pour la conversion numérique-analogique (14) délivrant un septième signal qui est envoyé à un filtre d'estimation d'écho (30) dont le signal de sortie est superposé avec soustraction (32) au sixième signal,
**caractérisé par le fait que**
les moyens pour la conversion numérique-analogique (14) comportent un filtre d'interpolation (97) auquel le deuxième signal est envoyé, un filtre de mise en forme de bruit numérique (98) branché du côté aval du filtre d'interpolation ainsi qu'un filtre de reconstruction analogique (99) encore branché du côté aval,
le signal de sortie du filtre de mise en forme de bruit numérique (98) est envoyé à un filtre d'approximation (104, 100) qui est branché du côté amont du filtre d'estimation d'écho (30).

2. Circuit selon la revendication 1,
**caractérisé par le fait que** le deuxième signal est envoyé côté entrée à un filtre d'estimation de retard (103) et que le signal de sortie de celui-ci est superposé par soustraction (105) au signal de sortie du filtre d'approximation (100) et est envoyé avec celui-ci au filtre d'estimation d'écho (30).

3. Circuit selon la revendication 1 ou 2,
**caractérisé par le fait que**, pour réduire le taux d'échantillonnage, il est prévu un filtre de décimation numérique (108, 100c) particulier qui est branché du côté aval du filtre d'approximation (104, 100a).

4. Circuit selon la revendication 3,
**caractérisé par le fait qu'**il est branché du côté amont du filtre de décimation (100c) un filtre d'estimation hybride (100b) qui approche le comportement du circuit hybride.

5. Circuit selon l'une des revendications précédentes,
**caractérisé par le fait que** le signal de sortie du filtre d'estimation d'écho (30), avec intercalation en série d'un autre filtre d'interpolation (109a), d'un autre filtre de mise en forme de bruit numérique (109b) ainsi que d'un autre filtre de décimation (109c), est combiné par soustraction (32) avec le signal de sortie des moyens pour la conversion analogique-numérique (20).
